# EUROPEAN PATENT SPECIFICATION

(11) **EP 2 063 158 B1**
(45) Date of publication and mention of the grant of the patent: **06.04.2011**
(21) Application number: 08104259.0
(22) Date of filing: 04.06.2008
(51) Int. Cl.: F16K 11/20, F16K 27/04, E03C 1/04

(54) **A water faucet**
Wasserarmatur
Robinet d'eau

(30) Priority: 22.11.2007 TR 200708071 U
(43) Date of publication of application: 27.05.2009
(73) Proprietor: Valfsel Armatur Sanayi Anonim Sirketi, Organize Sanayi Bolgesi 45030 Manisa (TR)
(72) Inventor: Zeren, Muzaffer, 45030 Manisa (TR); Cosan, Ahmet, 45030 Manisa (TR); Buyukdogan, Erdal, 45030 Manisa (TR); Gezer, Mahsube, 45030 Manisa (TR)
(74) Representative: Dericioglu, Ekin

(56) References cited:
- DE-A1- 2 543 112
- DE-A1- 10 102 479
- DE-C2- 3 991 109
- US-A1- 2005 022 885
- US-B1- 6 394 133

## Description

### Field of the Invention

The present invention relates to a water faucet which mixes hot and cold water.

### Background of the Invention

In current applications, in faucets which allow mixing of hot and cold water, the mixing ratio is adjusted by means of the handle. People who use faucets wherein the mixing ratio is adjusted as thus have to adjust the temperature and amount of the water at the same time. This situation causes difficulty in use and failure to perform temperature adjustment as desired. Several solutions have been developed to prevent these drawbacks.

Prior art water faucets according to the preamble of claim 1 are known for instance from DE-A-101 02 479.

The Turkish Utility Model document No. TR200601128, within the state of the art, discloses a water faucet realized to prevent the above described drawbacks. In the said document, there is seen an inner body which allows temperature adjustment to be made independently and an adjustment rod which allows the inner body to be brought to the desired position and is located behind the faucet, in an opening on the body. Although the water faucet described in the said document has overcome the above mentioned drawbacks, the position of the handle makes use difficult.

### Summary of the Invention

The objective of the present invention is to realize a water faucet which allows hot water cold water mixing ratio to be adjusted conveniently and as desired.

### Detailed Description of the Invention

The water faucet realized to fulfill the objectives of the present invention is illustrated in the accompanying figures, in which;

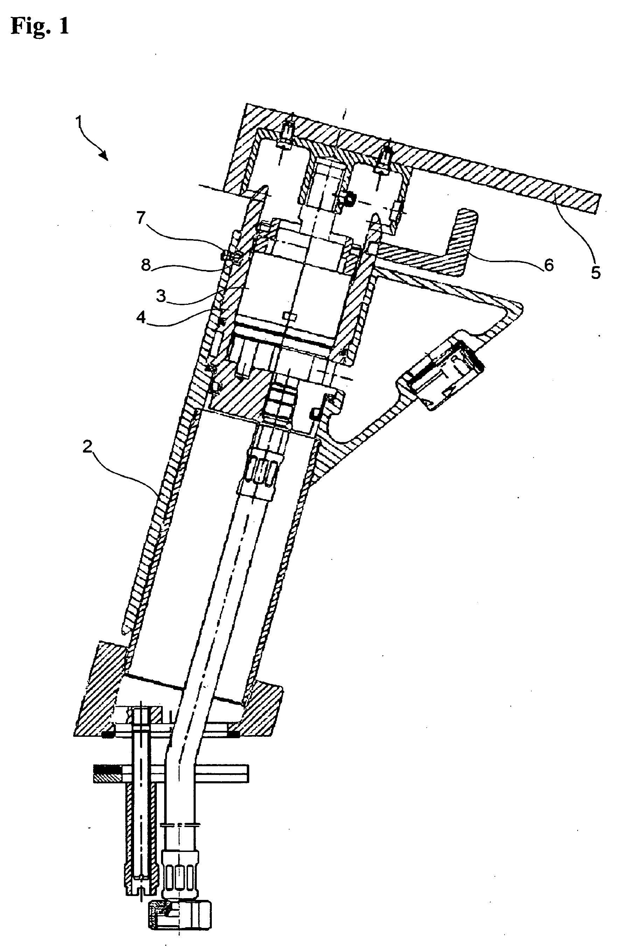

Figure 1 is the cross-sectional view of the water faucet.

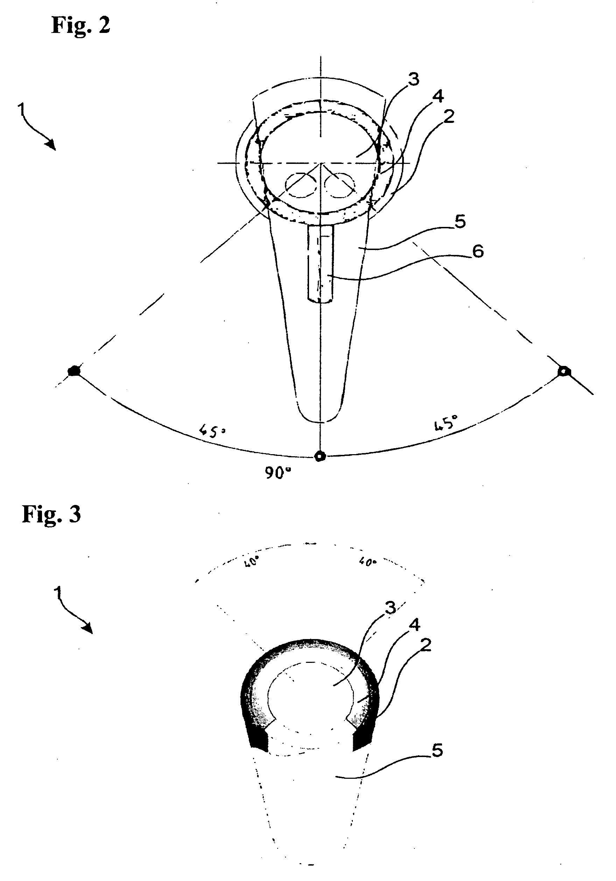

Figure 2 is the top view of the water faucet with the handle in the middle position and the hot and cold water mixing ratio 50%-50%.
Figure 3 is the top partial sectional view of the water faucet.
Figure 4 is the top view of the water faucet with the handle in the middle position and the cold water ratio is 95%.
Figure 5 is the top view of the water faucet with the handle in the middle position and the hot water ratio 95%.

The components shown in the figures are as follows:
1. Faucet
2. Body
3. Cartridge
4. Inner body
5. Handle
6. Adjustment rod
7. Screw
8. Groove

The inventive faucet (1)
comprises a body (2) accommodating the parts of the faucet (1),
a cartridge (3) which enables mixing of the hot and cold water,
an inner body (4) which accommodates the cartridge (3) and enables rotation of the same,
a handle (5) which adjusts the water amount and adjusts the ratio of hot and cold water by rotating the cartridge (3),
an adjustment rod (6) which performs a preliminary adjustment for the hot and cold water ratio of the water mixture by rotating the inner body (4) and is positioned on an extension of the inner body (4) rather than having an opening on the body (2) in order to facilitate access thereto,
a screw (7) which fastens the inner body (4) to the body (2) and a groove (8) which enables rotation of the inner body (4) is located on the external surface of the inner body (4), and is extending in the direction of rotation of the inner body (4) and into which the end of the screw (7) is fitted.

In standard faucets, when the water is turned on while the handle (5) is in the middle position, 50% - 50% hot and cold water mix ratio is obtained. Upon rotating the handle (5) the cartridge (3) also rotates and the mix ratio of the water changes.

In the inventive water faucet (1), 50% - 50% hot and cold water mix ratio is obtained at the initial turning on of the handle (5) like in the standard faucets. Again like in the standard faucets, hot water is obtained upon rotating the handle (5) 45° clockwise or cold water is attained upon rotating it 45° counterclockwise (Figure - 2).

The cartridge (3) is arranged within a second body (4) in the body (2). The inner body (4) can be rotated by means of the adjustment rod (6) (Figure - 3).

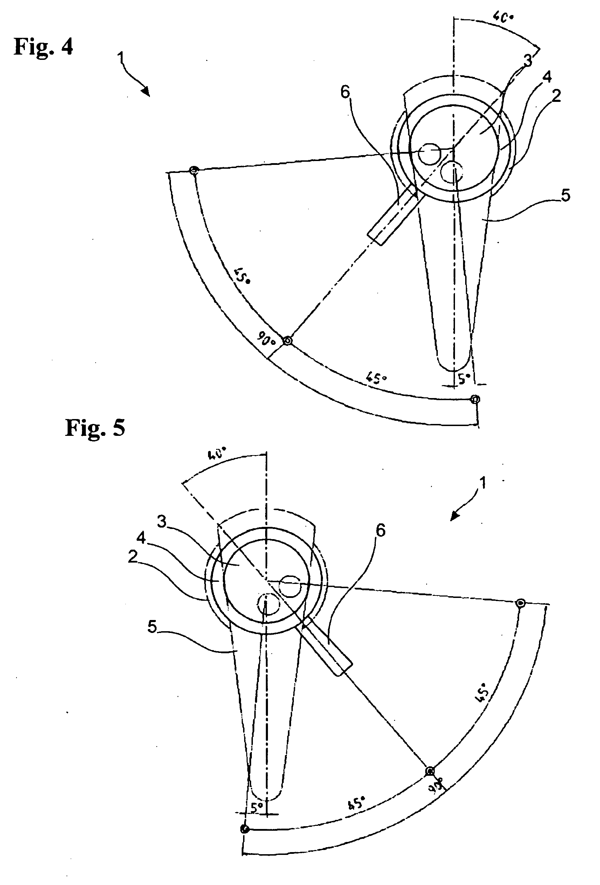

In the inventive faucet (I), after rotating the adjustment rod (6) 40° clockwise when it is in middle position, the inner body (4) also rotates and it is brought to the cold water adjustment. When the adjustment rod (6) is in the said position, if the handle (5) is brought to the middle position and the faucet is turned on, a mixture with 95% cold water will be obtained (Figure 4).

After rotating the adjustment rod (6) 40° counterclockwise when it is in middle position, the inner body (4) also rotates and it is brought to the hot water adjustment. When the adjustment rod (6) is in the said position, if the handle (5) is brought to the middle position and the faucet is turned on, a mixture with 95% hot water will be obtained (Figure 5).

## Claims

1. A water faucet (1) comprising a body (2) accommodating the parts of the faucet (1), a cartridge (3) which enables mixing of the hot and cold water, an inner body (4) which accommodates the cartridge (3) and enables rotation of the same and a handle (5) which adjusts the water amount and adjusts the ratio of hot and cold water by rotating the cartridge (3), and **characterized by** an adjustment rod (6) which performs a preliminary adjustment for the hot and cold water ratio of the water mixture by rotating the inner body (4) and is positioned on an extension of the inner body (4) rather than having an opening on the body (2) in order to facilitate access thereto, a screw (7) which fastens the inner body (4) to the body (2), and a groove (8) which enables rotation of the inner body (4), is located on the external surface of the inner body (4), and is extending in the direction of rotation of the inner body (4) and into which the end of the screw (7) is fitted.

## Patentansprüche

1. Eine Wasserarmatur (1) umfassend ein Gehäuse (2), das die Teile der Armatur (1) aufnimmt, eine Kartusche (3), die die Mischung des warmen und des kalten Wassers ermöglicht, ein inneres Gehäuse (4), das die Kartusche (3) aufnimmt und die Rotation derselben ermöglicht und einen Griff (5), der durch Drehung der Kartusche (3) die Wassermenge sowie den Anteil vom warmen und kalten Wasser regelt und **gekennzeichnet durch** eine Einstellstange (6), die **durch** Drehung des inneren Gehäuses (4) eine vorläufige Regelung des warmen und kalten Wasseranteils der Wassermischung ausführt und auf der Verlängerung des inneren Gehäuses (4) angeordnet ist, eher als eine Öffnung auf dem Gehäuse (2) zu haben um einen Zugang dazu zu ermöglichen, eine Schraube (7), die das innere Gehäuse (4) an das Gehäuse (2) befestigt und eine Rille (8), welche die Rotation des inneren Gehäuses (4) ermöglicht und auf der äusseren Oberfläche des inneren Gehäuses (4) angeordnet ist und sich in Drehrichtung des inneren Gehäuses (4) erstreckt und in welche die Endung der Schraube(7) angebracht ist.

## Revendications

1. Un robinet d'eau (1) consistant en un corps (2) contenant les pièces dudit robinet (1), une cartouche (3) assurant la mixture de l'eau chaude et froide, un corps intérieur (4) contenant ladite cartouche (3) et permettant la rotation de cette dernière et une tige (5) ajustant non seulement la quantité mais aussi la proportion de l'eau chaude et froide en tournant ladite cartouche (3), **caractérisé en ce qu'**il comprend une tige d'ajustement (6) située sur une extension du corps intérieur (4) plutôt que d'avoir une ouverture sur le corps (2) réalisant un ajustement préliminaire pour la proportion de l'eau chaude et froide de la mixture d'eau en tournant le corps intérieur (4) afin d'assurer le passage à l'intérieur ; une vis (7) fixant ledit corps intérieur (4) audit corps (2), et une cannelure (8) dans laquelle est placée ladite vis (7) et permettant la rotation dudit corps intérieur (4) et se trouvant sur la surface extérieure dudit corps intérieur (4) s'étendant vers la direction de rotation dudit corps intérieur (4).
